# FASCICULE DE BREVET EUROPEEN

(11) **EP 3 425 240 B1**
(45) Date de publication et mention de la délivrance du brevet: **04.11.2020**
(21) Numéro de dépôt: 18181523.4
(22) Date de dépôt: 03.07.2018
(51) Int. Cl.: F16H 57/04, F16H 1/20

(54) **RÉDUCTEUR ET BOGIE ASSOCIÉ**
GETRIEBEUNTERSETZUNG UND ENTSPRECHENDES DREHGESTELL
REDUCER AND ASSOCIATED BOGIE

(30) Priorité: 04.07.2017 FR 1756296
(43) Date de publication de la demande: 09.01.2019
(73) Titulaire: ALSTOM Transport Technologies, 93400 Saint-Ouen (FR)
(72) Inventeur: BENAIS, Cyrille, 71670 Saint Firmin (FR)
(74) Mandataire: Lavoix

(56) Documents cités:
- EP-A1- 0 811 521
- FR-A5- 2 106 978
- US-A- 1 220 811

## Description

La présente invention concerne un réducteur. La présente invention concerne également un bogie comprenant un tel réducteur.

Des réducteurs sont intégrés dans un grand nombre de systèmes mécaniques, pour transmettre un mouvement entre deux pièces tournant à des vitesses différentes, c'est-à-dire pour établir un rapport de transmission différent de 1 entre les deux pièces. En particulier, de tels réducteurs relient fréquemment un moteur à un essieu entraîné par le moteur, par exemple dans des voitures de véhicules ferroviaires.

Les réducteurs comprennent fréquemment un axe d'entrée, un axe de sortie et un axe intermédiaire transmettant un mouvement de l'axe d'entré à l'axe de sortie, ces axes coopérant les uns avec les autres par des engrenages agencés pour établir le rapport de transmission différent de 1. Afin d'assurer une transmission d'énergie aussi efficace que possible, les engrenages du réducteur sont, en général, lubrifiés avec un liquide tel qu'une huile.

Cependant, de nombreuses contraintes géométriques pèsent sur les réducteurs. Par exemple, l'encombrement des autres éléments du système mécanique dans lequel le réducteur est intégré impose fréquemment que les axes d'entrée et de sortie soient perpendiculaires l'un à l'autre, ou que les axes d'entrée et de sortie soient disposés à des hauteurs différentes.

Il est connu du document FR 2 106 978 A5 un dispositif de transmission d'un effort entre un moteur et un essieu, ce dispositif comprenant des arbres disposés à des hauteurs différentes par rapport au sol. Cependant, les arbres sont répartis dans deux carters distincts afin de permettre un déplacement relatif du moteur et de l'essieu, et les arbres reçus dans un même carter sont disposés à des hauteurs différentes les uns des autres. Ce dispositif présente donc des dimensions importantes, notamment selon la direction verticale.

Il est également connu un réducteur dans lequel l'arbre d'entrée est situé à une hauteur supérieure à celle de l'arbre de sortie, l'arbre de sortie étant perpendiculaire à l'arbre d'entrée. L'arbre intermédiaire est perpendiculaire à l'arbre de sortie et relié à celui-ci par un engrenage conique. Les engrenages coniques sont particulièrement susceptibles à l'apparition de frottements, et requièrent donc une lubrification plus efficace que d'autres types d'engrenages, tels que les engrenages droits.

Afin d'assurer une lubrification efficace de l'engrenage conique, l'élément d'engrenage porté par l'arbre de sortie baigne dans une réserve d'huile située dans la partie inférieure d'un carter logeant les arbres et les engrenages du réducteur. Ainsi, lorsque le réducteur est en fonctionnement, l'élément d'engrenage de l'arbre de sortie entraine l'huile jusqu'à l'engrenage conique, qui est ainsi lubrifié.

La réserve d'huile étant située dans la partie inférieure du carter, l'huile projetée sur les parois du carter est récupérée par gravité, ce qui permet d'assurer que la réserve d'huile ne se vide pas complètement en fonctionnement.

Cependant, les réducteurs de ce type ne sont adaptés, de par leur géométrie et leur encombrement, qu'à certaines applications. En particulier, ils présentent une largeur importante dans un plan horizontal au niveau de l'arbre de sortie, et donc de l'essieu d'un bogie de véhicule ferroviaire dans lequel ils seraient intégrés.

Il existe donc un besoin pour un réducteur présentant, dans sa partie basse, une un encombrement réduit par rapport aux réducteurs de l'état de la technique.

A cet effet, l'invention a pour objet un réducteur pour la transmission d'un mouvement d'un moteur à un élément entraîné par le moteur, le réducteur comportant un premier arbre et un deuxième arbre dont l'un est destiné à être relié au moteur et l'autre est destiné à être relié à l'élément entraîné par le moteur, le réducteur comportant, en outre, un arbre intermédiaire transmettant le mouvement du premier arbre au deuxième arbre et un carter délimitant une chambre, le premier arbre et le deuxième arbre s'étendant chacun au moins partiellement hors du carter, l'arbre intermédiaire étant accueilli dans la chambre et comprenant un premier élément d'engrenage coopérant avec le premier arbre et un deuxième élément d'engrenage coopérant avec le deuxième arbre.

Le premier arbre et l'arbre intermédiaire sont disposés à une première hauteur par rapport à un fond de la chambre, le deuxième arbre étant disposé à une deuxième hauteur par rapport au fond de la chambre, la deuxième hauteur étant inférieure à la première hauteur, et en ce que le réducteur comporte un premier bac de barbotage contenant un lubrifiant, le premier élément d'engrenage étant au moins partiellement immergé dans le premier bac de barbotage.

Grâce à l'invention, le réducteur présente une largeur faible dans sa partie basse, tout en permettant une lubrification efficace de l'engrenage entre le premier arbre et l'arbre intermédiaire, bien que cet engrenage soit éloigné du fond du carter.

Selon d'autres aspects avantageux de l'invention, le réducteur comprend une ou plusieurs des caractéristiques suivantes, prises isolément ou suivant toutes les combinaisons techniquement possibles :
- Le premier arbre et le deuxième arbre s'étendent dans des directions sensiblement perpendiculaires l'une à rapport à l'autre, l'arbre intermédiaire s'étendant selon une direction sensiblement parallèle à celle du deuxième arbre.
- Le premier élément d'engrenage est une couronne conique engrenant sur un pignon conique du premier arbre.
- Le carter comporte un bac de réserve en communication fluidique avec le premier bac de barbotage et contenant du lubrifiant.
- Le bac de réserve est en communication fluidique avec le premier bac de barbotage à travers au moins deux conduits s'étendant chacun selon un axe de conduite, l'angle entre les deux axes de conduite étant supérieur ou égal à 60 degrés.
- Le bac de réserve est en communication fluidique avec le premier bac de barbotage à travers au moins un conduit, le conduit présentant un diamètre inférieur ou égal à 20 millimètres.
- Le carter comporte au moins une goulotte configurée pour recueillir le lubrifiant projeté sur les parois du carter par la rotation du premier arbre et de l'arbre intermédiaire et pour transmettre le lubrifiant recueilli au premier bac de barbotage.
- Le deuxième arbre comporte un troisième élément d'engrenage engrenant sur le deuxième élément d'engrenage, le réducteur comportant un deuxième bac de barbotage contenant du lubrifiant et dans lequel le troisième élément d'engrenage est au moins partiellement immergé, le premier bac de barbotage étant configuré pour alimenter en lubrifiant le deuxième bac de barbotage par débordement.
- Le réducteur comporte, en outre, un déflecteur interposé entre le premier élément d'engrenage et les parois du carter, le déflecteur entourant au moins partiellement le premier élément d'engrenage et étant configuré pour recueillir au moins une partie du lubrifiant projeté par le premier élément d'engrenage lors de la rotation de l'arbre intermédiaire et pour transmettre le lubrifiant recueilli au premier bac de barbotage.

L'invention a également pour objet un bogie moteur de véhicule ferroviaire comportant un essieu, un moteur et un réducteur configuré pour transmettre un mouvement du moteur à l'essieu, le réducteur étant tel que défini ci-dessus, le premier arbre étant relié au moteur et le deuxième arbre étant relié à l'essieu.

D'autres aspects et avantages de l'invention apparaîtront à la lecture de la description qui va suivre, donnée uniquement à titre d'exemple non limitatif, et faite en référence aux dessins annexés, sur lesquels :
- la figure 1 est une vue en coupe dans un plan vertical d'un exemple de réducteur selon l'invention, et
- la figure 2 est une vue d'une coupe du réducteur selon le plan II-II de la figure 1.

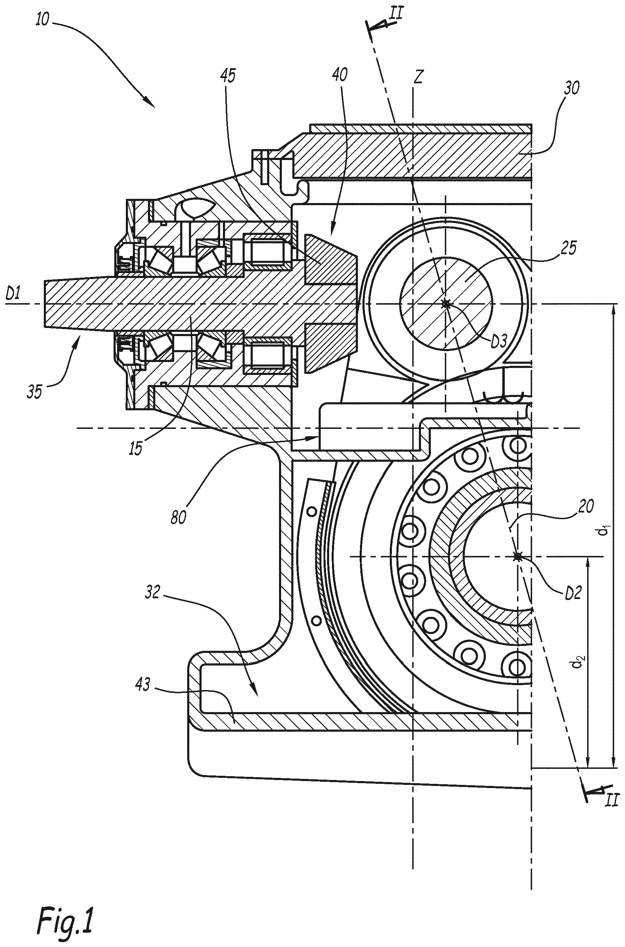

Un réducteur 10 est représenté sur la figure 1. Le réducteur 10 est intégré à un véhicule, tel qu'un véhicule ferroviaire. Par exemple, le réducteur 10 fait partie d'un bogie moteur du véhicule ferroviaire.

Le réducteur 10 est prévu pour transmettre un mouvement entre un moteur du véhicule et un élément entraîné par le moteur. Par exemple, l'élément entraîné par le moteur est un essieu du bogie.

Le réducteur 10 comporte un premier arbre 15, un deuxième arbre 20, un arbre intermédiaire 25, et un carter 30 délimitant une chambre 32.

Une direction d'élévation Z est définie pour le réducteur 10. La direction d'élévation Z correspond à une direction verticale lorsque le réducteur 10 est intégré dans un bogie et que le bogie est en fonctionnement à plat, c'est-à-dire disposé sur des rails sensiblement horizontaux. On définit les termes « inférieur » et « supérieur », « au-dessus », « en dessous » selon la direction d'élévation Z. Les hauteurs sont mesurées selon la direction d'élévation Z.

Un arbre parmi le premier arbre 15 et le deuxième arbre 20 est destiné à être relié au moteur et l'autre arbre 15, 20 est destiné à être relié à l'élément entrainé par le moteur.

Selon l'exemple de la figure 1, le premier arbre 15 est relié au moteur et le deuxième arbre 20 est relié à une roue du véhicule ou à un dispositif d'entraînement de la roue. Selon une variante, le premier arbre 15 est relié à l'élément entrainé par le moteur et le deuxième arbre 20 est relié au moteur.

Le premier arbre 15 s'étend au moins partiellement hors du carter 30. Le premier arbre 15 présente une première extrémité 35 et une deuxième extrémité 40.

Le premier arbre 15 s'étend selon une première direction D1 entre la première extrémité 35 et la deuxième extrémité 40. La première direction D1 est perpendiculaire à la direction d'élévation Z.

Le premier arbre 15 est, par exemple, cylindrique à base circulaire autour d'un premier axe. Le premier axe est confondu avec la première direction D1.

Le premier arbre 15 est disposé à une première hauteur d1 d'un fond 43 de la chambre 32. La première hauteur d1 est, par exemple, mesurée entre le fond de la chambre 32 et le premier axe, selon la direction d'élévation Z. Par fond, on entend la paroi inférieure la plus basse du carter délimitant la chambre 32.

La première hauteur d1 est, par exemple, comprise entre 450 millimètres (mm) et 550 mm, par exemple égale à 490 mm.

La première extrémité 35 est située à l'extérieur du carter 30. La première extrémité 35 est reliée au moteur, par exemple par un engrenage.

La deuxième extrémité 40 est accueillie dans la chambre 32. La deuxième extrémité 40 comporte ou porte un premier élément d'engrenage 45.

Le premier élément d'engrenage 45 est par exemple un pignon conique.

Le deuxième arbre 20 s'étend au moins partiellement hors du carter 30. Le deuxième arbre 20 est relié à un essieu ou forme une partie de l'un essieu d'un bogie de véhicule. Le deuxième arbre 20 est, par exemple, un arbre d'un essieu de bogie.

Le deuxième arbre 20 s'étend selon une deuxième direction D2. La deuxième direction D2 est sensiblement perpendiculaire à la première direction D1 et à la direction d'élévation Z.

Il est entendu par « sensiblement perpendiculaire » qu'un angle entre les directions considérées est égal à 90°, à 10° près.

Il est entendu par « sensiblement parallèle » qu'un angle entre les directions considérées est égal à 0°, à 10° près.

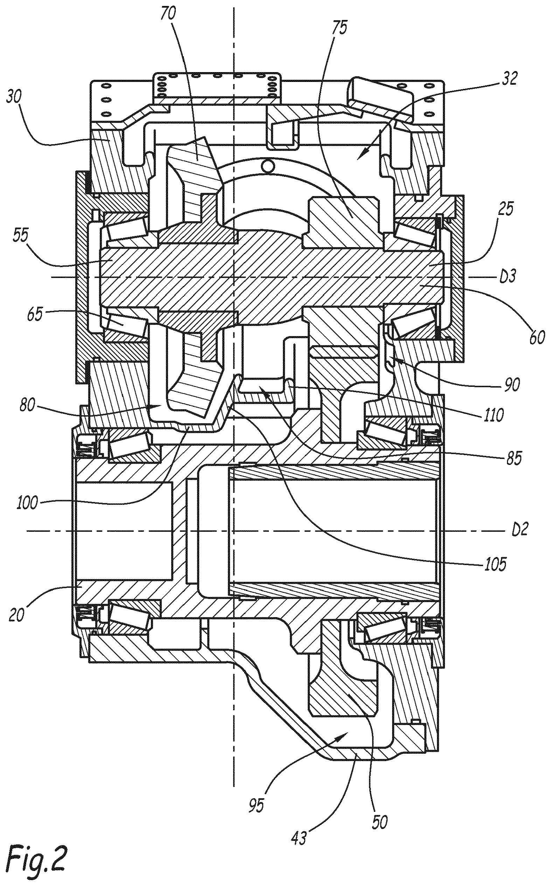

Selon l'exemple de la figure 2, le deuxième arbre 20 traverse le carter 30 de part en part selon la deuxième direction D2.

Le deuxième arbre 20 est, par exemple, cylindrique à base circulaire autour d'un deuxième axe.

Le deuxième arbre 20 est disposé à une deuxième hauteur d2 du fond de la chambre 32. La deuxième hauteur d2 est strictement inférieure à la première hauteur d1. En d'autres termes, si l'on considère que le premier arbre 15 est situé à un premier niveau, le deuxième arbre 20 est disposé à un deuxième niveau inférieur au premier niveau. La deuxième hauteur d2 est mesurée entre le deuxième axe et le fond de la chambre 32. La deuxième hauteur d2 est par exemple, comprise entre 200 mm et 250 mm, par exemple égale à 225mm. La différence entre la première hauteur d1 et la deuxième hauteur d2 est supérieure ou égale à 20 cm.

Le deuxième arbre 20 comporte ou porte, en outre, un deuxième élément d'engrenage 50.

Le deuxième élément d'engrenage 50 est par exemple une roue dentée. Le deuxième élément d'engrenage 50 est accueilli dans la chambre 32.

Le deuxième élément d'engrenage 50 présente, par exemple, une denture hélicoïdale. Selon une variante, le deuxième élément d'engrenage 50 présente une denture droite.

L'arbre intermédiaire 25 est accueilli dans la chambre 32. Par exemple, l'arbre intermédiaire 25 présente une troisième extrémité 55 et une quatrième extrémité 60. Chacune de la troisième extrémité 55 et de la deuxième extrémité 60 est montée libre en rotation dans les parois du carter 30. Selon un mode de réalisation, les extrémités 55, 60 de l'arbre intermédiaire 25 sont montées libres en rotation dans les parois du carter 30 via des roulements 65.

L'arbre intermédiaire 25 s'étend selon une troisième direction D3. La troisième direction D3 est sensiblement perpendiculaire à la première direction D1 et à la direction d'élévation Z. La troisième direction D3 est ainsi sensiblement parallèle à la deuxième direction D2.

Selon l'exemple de la figure 1, l'arbre intermédiaire 25 est cylindrique à base circulaire autour d'un troisième axe. Le premier axe et le troisième axe sont concourants et coplanaires.

Selon cet exemple, l'arbre intermédiaire 25 est disposé au premier niveau, c'est-à-dire que l'arbre intermédiaire 25 est disposé à la première hauteur d1 du fond de la chambre 32.

Le deuxième arbre 20 et l'arbre intermédiaire 25 sont superposés selon la direction d'élévation Z.

L'arbre intermédiaire 25 est configuré pour transmettre un mouvement du premier arbre 15 au deuxième arbre 20 par l'intermédiaire des premier et deuxième éléments d'engrenage, par exemple avec un rapport de transmission différent de 1.

L'arbre intermédiaire 25 comporte un troisième élément d'engrenage 70 et un quatrième élément d'engrenage 75.

Le troisième élément d'engrenage 70 est configuré pour coopérer avec le premier arbre 15. En particulier, le troisième élément d'engrenage 70 engrène sur le premier élément d'engrenage 45.

Le troisième élément d'engrenage 70 est par exemple une couronne conique.

Les nombres de dents des deuxième et troisième éléments d'engrenage 45 et 70 sont choisis, par exemple, pour obtenir un rapport de réduction compris entre 1,5 et 5.

Le troisième élément d'engrenage 70 est accueilli dans la chambre 32.

Selon une variante, les premier et troisième éléments d'engrenage 45 et 70 forment un engrenage hypoïde et non un engrenage conique, le premier et le troisième axe étant alors perpendiculaires mais non concourants.

Le quatrième élément d'engrenage 75 est accueilli dans la chambre 32. Le quatrième élément d'engrenage 75 coopère avec le deuxième arbre 20. En particulier, le quatrième élément d'engrenage 75 engrène sur le deuxième élément d'engrenage 50. Selon un mode de réalisation, le quatrième élément d'engrenage 75 est un pignon à denture hélicoïdale.

Le carter 30 est configuré pour isoler l'extérieur du carter 30 de l'intérieur de la chambre 32. En particulier, le carter 30 est configuré pour éviter une fuite de lubrifiant depuis l'intérieur de la chambre 32 vers l'extérieur du carter 30 ou l'entrée de poussières depuis l'extérieur du carter 30 jusqu'à l'intérieur de la chambre 32.

Le carter 30 comporte un premier bac de barbotage 80, un bac de réserve 85, au moins une goulotte 90, un deuxième bac de barbotage 95 et un déflecteur.

Le premier bac de barbotage 80 est configuré pour contenir un lubrifiant. Le lubrifiant est, par exemple, une huile adaptée à la lubrification d'une transmission par engrenage. Le premier bac de barbotage 80 est configuré pour que le troisième élément d'engrenage 70 soit au moins partiellement accueilli dans le premier bac de barbotage 80. En d'autres termes, lorsque le premier bac de barbotage 80 contient un lubrifiant, le troisième élément d'engrenage 70 est au moins partiellement immergé dans le lubrifiant contenu dans le premier bac de barbotage 80.

Le premier bac de barbotage 80 présente un premier volume V1. Le premier volume V1 est compris entre 0,2 litre et 0,6 litre, par exemple égal à 0,4 litre.

Le premier bac de barbotage 80 est interposé entre le troisième élément d'engrenage 70 et le deuxième arbre 20 selon la direction d'élévation Z.

Selon l'exemple de la figure 2, le premier bac de barbotage 80 est délimité par une paroi du carter 30, par un fond 100 venu de matière avec la paroi de carter 30 et par une première cloison périphérique 105.

Le fond 100 est interposé entre le deuxième arbre 20 et le troisième élément d'engrenage 70 selon la direction d'élévation Z.

La première cloison périphérique 105 entoure le premier bac de barbotage 80 au moins partiellement dans un plan perpendiculaire à la direction d'élévation Z. La première cloison périphérique 105 délimite alors le premier bac de barbotage 80 dans un plan perpendiculaire à la direction d'élévation Z.

La première cloison périphérique 105 est interposée entre le troisième élément d'engrenage 70 et le quatrième élément d'engrenage 75 selon la troisième direction D3.

Le bac de réserve 85 est configuré pour contenir du lubrifiant.

Le bac de réserve 85 est interposé entre le premier bac de barbotage 80 et le quatrième élément d'engrenage 75 selon la troisième direction D3. Le bac de réserve 85 est séparé du premier bac de barbotage 80 par la première cloison périphérique 105. Selon l'exemple de la figure 2, le bac de réserve 85 est délimité, selon la troisième direction D3, par la première cloison périphérique 105 et par une deuxième cloison périphérique 110.

Le bac de réserve 85 est en communication fluidique avec le premier bac de barbotage 80, c'est-à-dire que le bac de réserve 85 est configuré pour que le lubrifiant puisse circuler entre le premier bac de barbotage 80 et le bac de réserve 85.

Le bac de réserve 85 est en communication fluidique avec le premier bac de barbotage 80 à travers au moins un conduit s'étendant à travers la première cloison périphérique 105. Par exemple, le bac de réserve 85 est en communication fluidique avec le premier bac de barbotage 80 à travers au moins deux conduits.

Le bac de réserve 85 entoure le premier bac de barbotage 80 dans un plan perpendiculaire à la direction d'élévation Z, au moins partiellement.

Le bac de réserve 85 présente un deuxième volume V2. Le deuxième volume V2 est strictement supérieur au premier volume V1. Le deuxième volume V2 est compris entre 0,6 litre et 1 litre, par exemple égal à 0,8 litre.

Le fond du bac de réserve 85 est situé à une hauteur supérieure par rapport à la hauteur du fond 100 du bac de barbotage 80 par rapport au fond de la chambre.

Chaque conduit s'étend selon un axe de conduite.

Un angle entre les deux axes de conduite est supérieur ou égal à 60°. Par exemple, l'angle est égal à 90°, à 10° près.

Selon un mode de réalisation, un premier conduit est ménagé dans une portion de la première cloison périphérique 105 perpendiculaire à la troisième direction D3 et s'étend selon un axe de conduite parallèle à la troisième direction D3. Un deuxième conduit est alors ménagé dans une portion de la première cloison périphérique 105 parallèle à la troisième direction D3 et s'étend selon un axe de conduite perpendiculaire à la troisième direction D3.

Chaque conduit présente un diamètre. Au moins un de ces diamètres est inférieur ou égal à 20 mm. Par exemple, chaque conduit présente un diamètre inférieur ou égal à 20 mm.

Le premier bac de barbotage 80 est configuré pour alimenter en lubrifiant le deuxième bac de barbotage 95 par débordement. Selon un mode de réalisation, le premier bac de barbotage 80 et le bac de réserve 85 sont configurés pour alimenter en lubrifiant le deuxième bac de barbotage 95 par débordement. En d'autres termes, le premier bac de barbotage 80 et le bac de réserve 85 sont configurés pour qu'un excès éventuel de lubrifiant dans le premier bac de barbotage 80 et le bac de réserve 85 se déverse dans le deuxième bac de barbotage 95.

Selon l'exemple de la figure 2, la deuxième cloison périphérique 110 délimite une ouverture du carter 30 traversée par le deuxième élément d'engrenage 50. Ainsi, un excès de lubrifiant dans le premier bac de barbotage 80 et le bac de réserve 85 se déverse dans la partie inférieure du carter 30 par-dessus la deuxième cloison périphérique 110.

Chaque goulotte 90 est configurée pour recueillir le lubrifiant projeté sur les parois du carter 30 lors de la rotation du premier arbre 15 et de l'arbre intermédiaire 25. Chaque goulotte 90 est configurée pour transmettre le lubrifiant recueilli au premier bac de barbotage 80. Par exemple, au moins une goulotte 90 est configurée pour transmettre le lubrifiant recueilli au bac de réserve 85, le lubrifiant atteignant ensuite le premier bac de barbotage 80 à travers le conduit.

Chaque goulotte 90 est ménagée dans une paroi du carter 30.

Le deuxième bac de barbotage 95 est configuré pour contenir du lubrifiant. Lorsque le deuxième bac de barbotage 95 contient du lubrifiant, le deuxième élément d'engrenage 50 est au moins partiellement immergé dans le lubrifiant contenu dans le deuxième bac de barbotage 95. Le deuxième bac de barbotage 95 présente un volume compris entre 4 litres et 6 litres, par exemple égal à 5 litres.

Le deuxième bac de barbotage 95 est situé dans la partie la plus basse de la chambre 32. La première hauteur d1 et la deuxième hauteur d2 sont mesurées à partir du fond du deuxième bac de barbotage 95, c'est-à-dire que le fond 43 du deuxième bac de barbotage forme au moins une partie du fond de la chambre.

Le déflecteur est interposé entre le troisième élément d'engrenage 70 et les parois du carter 30. Par exemple, le déflecteur enveloppe au moins partiellement le troisième élément d'engrenage 70.

Le déflecteur est fixé aux parois du carter 30.

Le déflecteur est configuré pour recueillir au moins une partie du lubrifiant projeté par le troisième élément d'engrenage 70 lors de la rotation de l'arbre intermédiaire 25.

Le déflecteur est configuré pour transmettre le lubrifiant recueilli au premier bac de barbotage 80. Par exemple, le déflecteur est situé au-dessus du premier bac de barbotage 80.

Selon un mode de réalisation, le déflecteur comprend une paroi cylindrique entourant au moins partiellement le troisième élément d'engrenage 70 dans un plan perpendiculaire à la troisième direction D3. Selon une variante, le déflecteur comporte un disque perpendiculaire à la troisième direction D3 et interposé entre le troisième élément d'engrenage 70 et le quatrième élément d'engrenage 75.

Le déflecteur est, par exemple, réalisé en un métal tel que l'acier.

L'utilisation du bac de barbotage 80 permet une bonne lubrification de l'engrenage conique entre le premier arbre 15 et l'arbre intermédiaire 25. Ainsi, le bac de barbotage 80 permet de placer l'engrenage conique dans la partie supérieure du réducteur 10 au lieu de la partie inférieure. Il est donc possible de placer l'arbre intermédiaire 25 à une hauteur supérieure à la hauteur du deuxième arbre, et donc de limiter l'encombrement dans la partie basse du réducteur 10.

Le lubrifiant contenu dans le bac de réserve 85 est moins affecté par le mouvement du troisième élément d'engrenage 70 que le premier bac de barbotage 80. Le bac de réserve 85, de par sa grande contenance, forme une zone tampon qui permet d'assurer la réalimentation efficace en lubrifiant du bac de barbotage 80.

L'angle entre les axes de conduite des différents conduits permet d'éviter que les perturbations causées, dans le lubrifiant contenu dans le premier bac de barbotage, par la rotation du troisième élément d'engrenage 70 s'opposent à l'arrivée de lubrifiant depuis le bac de réserve 85. De fait, si ces perturbations limitent l'arrivée par l'un des conduits, l'angle est assez important pour que l'autre conduit ne soit pas affecté. Ainsi, l'alimentation en lubrifiant du bac de barbotage 80 est plus efficace, ce qui rend donc plus fiable le réducteur 10.

Par ailleurs, un diamètre de conduit inférieur ou égal à 25 mm limite également la propagation des perturbations depuis le premier bac de barbotage 80 jusqu'au bac de réserve 85, tout en assurant un début de lubrifiant suffisant.

Le déflecteur contribue également à une meilleure alimentation du bac de barbotage 80 en lubrifiant, puisqu'il recueille une grande partie du lubrifiant qui aurait sinon été projeté sur les parois du carter et risquerait de retomber dans le deuxième bac de barbotage 95. Ainsi, la lubrification de l'engrenage conique entre le premier arbre 15 et l'arbre intermédiaire 25 est améliorée et le réducteur 10 est plus fiable.

L'exemple ci-dessus a été décrit dans le cas d'un engrenage conique entre premier arbre 15 et l'arbre intermédiaire 25. Il est à noter que d'autres types d'engrenages sont susceptibles d'être utilisés en conjonction avec un bac de barbotage 80 situé dans une partie haute du carter 30. Par exemple, dans un cas où les trois arbres 15, 20 et 25 seraient parallèles entre eux, des engrenages droits sont susceptibles d'être utilisés.

## Revendications

1. Réducteur (10) pour la transmission d'un mouvement d'un moteur à un élément entraîné par le moteur, le réducteur (10) comportant un premier arbre (15) et un deuxième arbre (20) dont l'un est destiné à être relié au moteur et l'autre est destiné à être relié à l'élément entraîné par le moteur, le réducteur (10) comportant, en outre, un arbre intermédiaire (25) transmettant le mouvement du premier arbre (15) au deuxième arbre (20) et un carter (30) délimitant une chambre (32), le premier arbre (15) et le deuxième arbre (20) s'étendant chacun au moins partiellement hors du carter (30), l'arbre intermédiaire (25) étant accueilli dans la chambre (32) et comprenant un premier élément d'engrenage (70) coopérant avec le premier arbre (15) et un deuxième élément d'engrenage (75) coopérant avec le deuxième arbre (20),
**caractérisé en ce que** le premier arbre (15) et l'arbre intermédiaire (25) sont disposés à une première hauteur (d1) par rapport à un fond de la chambre (32), le deuxième arbre (20) étant disposé à une deuxième hauteur (d2) par rapport au fond de la chambre (32), la deuxième hauteur (d2) étant inférieure à la première hauteur (d1), et **en ce que** le réducteur (10) comporte un premier bac de barbotage (80) contenant un lubrifiant, le premier élément d'engrenage (70) étant au moins partiellement immergé dans le premier bac de barbotage (80).

2. Réducteur (10) selon la revendication 1, dans lequel le premier arbre (15) et le deuxième arbre (20) s'étendent dans des directions (D1, D2) telles qu'un angle entre les directions (D1, D2) du premier arbre (15) et du deuxième arbre (20) est égal à 90 degrés, à 10 degrés près, l'arbre intermédiaire (25) s'étendant selon une direction (D3) telle qu'un angle entre la direction (D3) selon laquelle l'arbre intermédiaire (25) s'étend et la direction (D2) selon laquelle le deuxième arbre (20) s'étend est égale à zéro degrés, à 10 degrés près.

3. Réducteur (10) selon la revendication 1 ou 2, dans lequel le premier élément d'engrenage (70) est une couronne conique engrenant sur un pignon conique (45) du premier arbre (15).

4. Réducteur (10) selon l'une quelconque des revendications 1 à 3, dans lequel le carter (30) comporte un bac de réserve (85) en communication fluidique avec le premier bac de barbotage (80) et contenant du lubrifiant.

5. Réducteur (10) selon la revendication 4, dans lequel le bac de réserve (85) est en communication fluidique avec le premier bac de barbotage (80) à travers au moins deux conduits s'étendant chacun selon un axe de conduite, l'angle entre les deux axes de conduite étant supérieur ou égal à 60 degrés.

6. Réducteur (10) selon la revendication 4 ou 5, dans lequel le bac de réserve (85) est en communication fluidique avec le premier bac de barbotage (80) à travers au moins un conduit, le conduit présentant un diamètre inférieur ou égal à 20 millimètres.

7. Réducteur (10) selon l'une quelconque des revendications 1 à 6, dans lequel le carter (30) comporte au moins une goulotte configurée pour recueillir le lubrifiant projeté sur les parois du carter (30) par la rotation du premier arbre (15) et de l'arbre intermédiaire (25) et pour transmettre le lubrifiant recueilli au premier bac de barbotage (80).

8. Réducteur (10) selon l'une quelconque des revendications 1 à 7, dans lequel le deuxième arbre (20) comporte un troisième élément d'engrenage (50) engrenant sur le deuxième élément d'engrenage (75), le réducteur (10) comportant un deuxième bac de barbotage (95) contenant du lubrifiant et dans lequel le troisième élément d'engrenage (50) est au moins partiellement immergé, le premier bac de barbotage (80) étant configuré pour alimenter en lubrifiant le deuxième bac de barbotage (95) par débordement.

9. Réducteur (10) selon l'une quelconque des revendications 1 à 8, comportant, en outre, un déflecteur interposé entre le premier élément d'engrenage (70) et les parois du carter (30), le déflecteur entourant au moins partiellement le premier élément d'engrenage (70) et étant configuré pour recueillir au moins une partie du lubrifiant projeté par le premier élément d'engrenage (70) lors de la rotation de l'arbre intermédiaire (25) et pour transmettre le lubrifiant recueilli au premier bac de barbotage (80).

10. Réducteur (10) selon l'une quelconque des revendications 1 à 9, dans lequel le carter (30) à partir duquel la première hauteur (d1) et la deuxième hauteur (d2) sont mesurées comprend le premier bac de barbotage (80).

11. Bogie moteur de véhicule ferroviaire comportant un essieu, un moteur et un réducteur (10) configuré pour transmettre un mouvement du moteur à l'essieu, **caractérisée en ce que** le réducteur (10) est selon l'une quelconque des revendications 1 à 10, le premier arbre (15) étant relié au moteur et le deuxième arbre (20) étant relié à l'essieu.

## Patentansprüche

1. Getriebe (10) zur Übertragung einer Bewegung eines Motors an ein von dem Motor angetriebenes Element, wobei das Getriebe (10) aufweist eine erste Welle (15) und eine zweite Welle (20), von denen eine dazu bestimmt ist, mit dem Motor verbunden zu sein, und die andere dazu bestimmt ist, mit dem von dem Motor angetriebenen Element verbunden zu sein, wobei das Getriebe (10 ferner aufweist eine Zwischenwelle (25), die die Bewegung der ersten Welle (15) an die zweite Welle (20) überträgt, und ein Gehäuse (30), das eine Kammer (32) begrenzt, wobei die erste Welle (15) und die zweite Welle (20) sich jeweils zumindest teilweise über das Gehäuse (30) hinaus erstreckt, wobei die Zwischenwelle (25) in der Kammer (32) aufgenommen ist und aufweist ein erstes Eingriffselement (70), das mit der ersten Welle (15) zusammenwirkt, und ein zweites Eingriffselement (75), das mit der zweiten Welle (20) zusammenwirkt,
**dadurch gekennzeichnet, dass** die erste Welle (15) und die Zwischenwelle (25) in einer ersten Höhe (d1) bezüglich eines Bodens der Kammer (32) angeordnet sind, die zweite Welle (20) in einer zweiten Höhe (d2) bezüglich des Bodens der Kammer (32) angeordnet ist, die zweite Höhe (d2) kleiner als die erste Höhe (d1) ist und dass das Getriebe (10) eine erste Spritzwanne (80) aufweist, die ein Schmiermittel enthält, wobei das erste Eingriffselement (70) zumindest teilweise in die erste Spritzwanne (80) eingetaucht ist.

2. Getriebe (10) gemäß Anspruch 1, wobei die erste Welle (15) und die zweite Welle (20) sich in Richtungen (D1, D2) erstrecken, sodass ein Winkel zwischen den Richtungen (D1, D2) der ersten Welle (15) und der zweiten Welle (20) gleich 90 Grad ist, bei 10 Grad Ungenauigkeit, wobei die Zwischenwelle (25) sich entlang einer Richtung (D3) erstreckt, sodass ein Winkel zwischen der Richtung (D3), entlang welcher sich die Zwischenwelle erstreckt (25), und der Richtung (D2), entlang welcher sich die zweite Welle (20) erstreckt, gleich null Grad ist, bei 10 Grad Ungenauigkeit.

3. Getriebe (10) gemäß Anspruch 1 oder 2, wobei das erste Eingriffselement (70) ein Kegelzahnkranz ist, der mit einem Kegelritzel (45) der ersten Welle (15) im Eingriff ist.

4. Getriebe (10) gemäß irgendeinem der Ansprüche 1 bis 3, wobei das Gehäuse (30) eine Vorratswanne (85) aufweist, die mit der ersten Spritzwanne (80) in Fluidkommunikation ist und die das Schmiermittel enthält.

5. Getriebe (10) gemäß Anspruch 4, wobei die Vorratswanne (85) in Fluidkommunikation mit der ersten Spritzwanne (80) ist durch wenigstens zwei Leitungen, die sich jeweils entlang einer Leitungsachse erstrecken, wobei der Winkel zwischen den beiden Leitungsachsen größer oder gleich 60 Grad ist.

6. Getriebe (10) gemäß Anspruch 4 oder 5, wobei die Vorratswanne (85) in Fluidkommunikation mit der ersten Spritzwanne (80) ist durch wenigstens eine Leitung, wobei die Leitung einen Durchmesser hat, der kleiner oder gleich 20 Millimeter ist.

7. Getriebe (10) gemäß irgendeinem der Ansprüche 1 bis 6, wobei das Gehäuse (30) wenigstens einen Ablaufkanal aufweist, der konfiguriert ist zum Sammeln des Schmierstoffs, der durch die Rotation der ersten Welle (15) und der Zwischenwelle (25) auf die Wände des Gehäuses (30) geschleudert wurde, und zum Überführen des gesammelten Schmierstoffs an die erste Spritzwanne (80).

8. Getriebe (10) gemäß irgendeinem der Ansprüche 1 bis 7, wobei die zweite Welle (20) ein drittes Eingriffselement (50) aufweist, das mit dem zweiten Eingriffselement (75) im Eingriff ist, wobei das Getriebe (10) eine zweite Spritzwanne (95) aufweist, die den Schmierstoff enthält und in welche das dritte Eingriffselement (50) zumindest teilweise eingetaucht ist, wobei die erste Spritzwanne (80) konfiguriert ist zum Versorgen der zweiten Spritzwanne (95) mit Schmierstoff via Überlaufen.

9. Getriebe (10) gemäß irgendeinem der Ansprüche 1 bis 8, ferner aufweisend einen Deflektor, der zwischen dem ersten Eingriffselement (70) und den Wänden des Gehäuses (30) angeordnet ist, wobei der Deflektor das erste Eingriffselement (70) zumindest teilweise umgibt und konfiguriert ist zum Sammeln wenigstens eines Teils des von dem ersten Eingriffselement (70) weggeschleuderten Schmierstoffs während der Rotation der Zwischenwelle (25) und zum Überführen des gesammelten Schmierstoffs an die erste Spritzwanne (80).

10. Getriebe (10) gemäß irgendeinem der Ansprüche 1 bis 9, wobei das Gehäuse (30), von welchem ausgehend die erste Höhe (d1) und die zweite Höhe (D2) gemessen werden, die erste Spritzwanne (80) aufweist.

11. Schienenfahrzeug-Drehgestell-Antrieb mit einer Achse, einem Motor und einem Getriebe (10), das konfiguriert ist zum Übertragen einer Bewegung des Motors an die Achse, **dadurch gekennzeichnet, dass** das Getriebe (10) gemäß irgendeinem der Ansprüche 1 bis 10 ist, wobei die erste Welle (15) mit dem Motor verbunden ist und die zweite Welle (20) mit der Achse verbunden ist.

## Claims

1. A gearbox (10) for transmitting a movement from a motor to an element driven by the motor, the gearbox (10) including a first shaft (15) and a second shaft (20), one of which is intended to be connected to the motor and the other of which is intended to be connected to the element driven by the motor, the gearbox (10) further including an intermediate shaft (25) transmitting the movement from the first shaft (15) to the second shaft (20) and a casing (30) delimiting a chamber (32), the first shaft (15) and the second shaft (20) each extending at least partially outside the casing (30), the intermediate shaft (25) being accommodated in the chamber (32) and comprising a first gearing element (70) cooperating with the first shaft (15) and a second gearing element (75) cooperating with the second shaft (20),
**characterized in that** the first shaft (15) and the intermediate shaft (25) are arranged at a first height (d1) relative to a bottom of the chamber (32), the second shaft (20) being arranged at a second height (d2) relative to the bottom of the chamber (32), the second height (d2) being lower than the first height (d1), and **in that** the gearbox (10) includes a first splash tub (80) containing a lubricant, the first gearing element (70) being at least partially submerged in the first splash tub (80).

2. The gearbox (10) according to claim 1, wherein the first shaft (15) and the second shaft (20) extend in directions (D1, D2) such that an angle between the directions (D1, D2) of the first shaft (15) and the second shaft (20) is equal to 90 degrees, to within 10 degrees, the intermediate shaft (25) extending in a direction (D3) such that and angle between the direction along which the intermediate shaft (25) extends and the direction (D2) along which the second shaft (20) extends is equal to zero, to within 10 degrees.

3. The gearbox (10) according to claim 1 or 2, wherein the first gearing element (70) is a conical ring meshing on a conical pinion (45) of the first shaft (15).

4. The gearbox (10) according to any one of claims 1 to 3, wherein the casing (30) includes a reserve tub (85) in fluid communication with the first splash tub (80) and containing lubricant.

5. The gearbox (10) according to claim 4, wherein the reserve tub (85) is in fluid communication with the first splash tub (80) through at least two conduits each extending along a conduit axis, the angle between the two conduit axes being greater than or equal to 60 degrees.

6. The gearbox (10) according to claim 4 or 5, wherein the reserve tub (85) is in fluid communication with the first splash tub (80) through at least one conduit, the conduit having a diameter smaller than or equal to 20 millimeters.

7. The gearbox (10) according to any one of claims 1 to 6, wherein the casing (30) includes at least one trough configured to collect the lubricant sprayed on the walls of the casing (30) by the rotation of the first shaft (15) and the intermediate shaft (25) and to transmit the collected lubricant to the first splash tub (80).

8. The gearbox (10) according to any one of claims 1 to 7, wherein the second shaft (20) includes a third gearing element (50) meshing on the second gearing element (75), the gearbox (10) including a second splash tub (95) containing lubricant and in which the third gearing element (50) is at least partially submerged, the first splash tub (80) being configured to supply lubricant to the second splash tub (95) by overflow.

9. The gearbox (10) according to any one of claims 1 to 8, further including a deflector inserted between the first gearing element (70) and the walls of the casing (30), the deflector at least partially surrounding the first gearing element (70) and being configured to collect at least part of the lubricant sprayed by the first gearing element (70) during the rotation of the intermediate shaft (25) and transmit the collected lubricant to the first splash tub (80).

10. The gearbox (10) according to any one of claims 1 to 9, wherein the casing (30) from which the first height (d1) and the second height (d2) are measured comprises the first splash tub (80).

11. A railway vehicle motor bogie including an axle, a motor and a gearbox (10) configured to transmit a movement from the motor to the axle, **characterized in that** the gearbox (10) is according to any one of claims 1 to 10, the first shaft (15) being connected to the motor and the second shaft (20) being connected to the axle.
